# EUROPEAN PATENT APPLICATION

(11) **EP 2 551 812 A2**
(43) Date of publication of application: **30.01.2013**
(21) Application number: 12177360.0
(22) Date of filing: 20.07.2012
(51) Int. Cl.: G06Q 10/10

(54) **Augmented report viewing**

(30) Priority: 27.07.2011 US 201113191499
(71) Applicant: Business Objects Software Limited, Dublin 1 (IE)
(72) Inventor: Hobbs, Godfrey, Dublin 1 (IE)
(74) Representative: Cole, Douglas Lloyd

(57) **Abstract**

Various embodiments of systems and methods for augmented report viewing are described herein. An image of a report tag of a printed report is captured using a mobile device. The report tag is decoded. The printed report includes one or more report parts and corresponding report part tags. After a successful match based on the decoded tag, a report part tag that corresponds to a report part of the printed report is captured. The report part tag is then decoded. Based on the decoded report part tag, a rendered report part is presented on a screen of the mobile device. In response to a user operation on the mobile device after the rendered report part is presented on the screen, an updated report part is received at the mobile device. The updated report part is then presented on the screen of the mobile device.

## Description

### FIELD

The field relates generally to methods for viewing reports on a computing device. More particularly, the field relates to a method for augmented viewing of a printed report using a mobile device.

### BACKGROUND

Data analysis has become a key routine in almost all domains. Several data analysis-related software systems and applications are available. Such software applications use data in one or more data sources to generate reports. The reports include various sections such as charts and tables to provide analysis of data. A series of sections may be logically arranged showing visualizations for successive time periods, geographic regions, or the like. The reports aim to provide a picture of data of interest and assist in making meaningful interpretations and informed decisions.

Printed reports are used in many situations. Printed reports, though useful, provide a picture of past data and are static in nature. A user who is in possession of a printed report may feel the need for augmented viewing such as, for example, viewing an updated report reflecting latest data, manipulation of the report (e.g., drill down, filtering, providing a new parameter value), or some other action (e.g., localizing report). For any such augmented viewing, the user is required to access a software application that generated the report. However, this may not be possible because the user may not have the required skill to use the software application to generate an updated report. A level of understanding about the software application and how to generate a report is typically required. Even if the user is capable of using the software application, there may be several constraints such as time constraints, access constraints, and device constraints. It would therefore be desirable to provide augmented viewing of a printed report.

### SUMMARY

Various embodiments of systems and methods for augmented report viewing are described herein. An image of a report tag of a printed report is captured using a mobile device. The report tag is decoded. The printed report includes one or more report parts and corresponding report part tags. After a successful match based on the decoded report tag, a report part tag that corresponds to a report part of the printed report is captured. The report part tag is then decoded. Based on the decoded report part tag, a rendered report part is presented on a screen of the mobile device. In response to a user operation on the mobile device after the rendered report part is presented on the screen, an updated report part is received at the mobile device. The updated report part is then presented on the screen of the mobile device.

These and other benefits and features of embodiments of the invention will be apparent upon consideration of the following detailed description of preferred embodiments thereof, presented in connection with the following drawings.

### BRIEF DESCRIPTION OF THE DRAWINGS

The claims set forth the embodiments of the invention with particularity. The invention is illustrated by way of example and not by way of limitation in the figures of the accompanying drawings in which like references indicate similar elements. The embodiments of the invention, together with its advantages, may be best understood from the following detailed description taken in conjunction with the accompanying drawings.

**FIG. 1** is an illustration of a printed report according to one embodiment.

**FIG. 2** is an illustration when a report tag is captured by a mobile device according to one embodiment.

**FIG. 3** is an illustration when a report part tag is captured by the mobile device according to one embodiment.

**FIG. 4** is an illustration when a report part is received from a repository and presented on the screen of the mobile device according to one embodiment.

**FIG. 5** is an illustration when an updated report part is presented on the screen of the mobile device according to one embodiment.

**FIG. 6** is an illustration when an updated report part is presented on the screen of another type of mobile device according to one embodiment.

**FIG. 7** is an illustration where another report part is received from a repository and presented on the screen of the mobile device according to one embodiment.

**FIG. 8** is an illustration where a new image is presented on the screen of the mobile device according to one embodiment.

**FIG. 9A** illustrates an embodiment of a method for augmented report viewing.

**FIG. 9B** illustrates another embodiment of a method for augmented report viewing.

**FIG. 10** illustrates components required for augmented viewing according to one embodiment.

**FIG. 11** is a block diagram of an exemplary computer system according to one embodiment.

### DETAILED DESCRIPTION

Embodiments of techniques for augmented report viewing are described herein. In the following description, numerous specific details are set forth to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment", "this embodiment" and similar phrases, means that a particular feature, structure, or characteristic described in connection with the embodiment is included in at least one embodiment of the present invention. Thus, the appearances of these phrases in various places throughout this specification are not necessarily all referring to the same embodiment. Furthermore, the particular features, structures, or characteristics may be combined in any suitable manner in one or more embodiments.

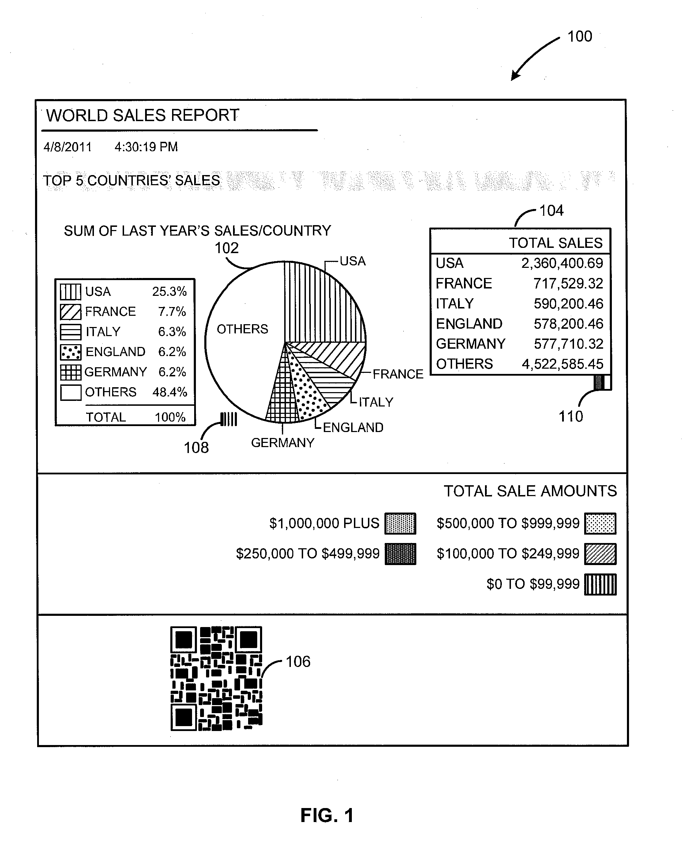

FIG. 1 illustrates an embodiment of a printed report 100. The report includes report parts such as a pie chart 102 and a table 104. The printed report 100 provides an analysis of data of interest that is stored in one or more data sources. Typically, a data analysis-related software application is used to generate reports. Such software applications include several options and features to generate a variety of reports to provide analyses of data in a data source. Various means such as tables and charts can be used to provide an analysis of data. In many cases, users may not be able to generate a report due to several factors such as software access constraints and lack of knowledge about software application. Also, users who are interested in the report may not be the same users who generate the report. Therefore, once generated, the report can be printed. The printed report 100 can then be provided to users.

According to an embodiment, the printed report corresponds to an instance of a document. In one embodiment, the document refers to a file or organization of structured information that includes document data and a document template. The document could be a report, spreadsheet, workbook, etc. A document is an organization of structured information that comprises a snapshot of data, a processing template and which may also include user input such as parameter values. A report part may be a section of a report and section may differ by a parameter value, e.g., Canada, India, or 2010Q4, 2011Q1. A snapshot of data may be generated by a data query that may or may not have been created through a semantic layer. The data query may access one or many data sources (e.g., relational, OLAP, or other). The user may enter a snapshot of data in whole or part. A processing template may include formulas, sorts, grouping, and aggregation functions like sums, counts, and averages. A processing template may also include formatting information that specifies how the data should be formatted and presented to the user. In one embodiment, the report includes information automatically retrieved from a data source that is structured and formatted in accordance with a report template.

An identifier is assigned to each instance of a document. A report tag 106 encodes the identifier of an instance of a document. The report tag 106 can be any type of code that encodes an identifier of an instance of a report. For example, the report tag can include a bar code, a color code, a watermark, or a quick response (QR) code. The report tag can include a printed identifier which can be a series of characters such as "Af6SXD8cxq5Pu77TaMS_eiw." For example, the printed identifier can be an object identifier, a cluster unique identifier (CUID), a global unique identifier (GUID), or a package identifier (RUID) in the context of SAP^{®} BusinessObjects™ Business Intelligence Platform (an offering of SAP AG of Walldorf, Germany). The size of the report tag 106 depends on the amount of information that needs to be encoded. Similarly, a report part identifier is assigned to each report part 102 and 104 of an instance of a report. A report part is a portion of a report and includes a section, a table, a chart, a map, a cell, a field, a control, combinations of two or more of these, and the like. A report part tag 108 and 110 encodes a report part identifier. The report tag can include a bar code, a color code, a QR code, a watermark, or any other type of code that encodes a report part identifier. In FIG. 1, a QR code 106 is used as the report tag for the printed report 100, a bar code 108 is used as the report part tag for the pie chart 102, and a color code 110 is used as the report part tag for the table. The identifiers of various document instances and report parts are stored in a central repository. In one embodiment, the central repository is a database that is used to store information such as user, server, folder, document, configuration, authorization, and authentication details.

In one embodiment, metadata of the report parts (e.g., 102 and 104) can be included in the report tag. Therefore, the size of the report tag 106 can be dependent on the number of report parts that are in the report 100. Smaller-size tags (e.g., mini QR codes) can be used as report tags for reports that have less number of report parts and larger-size report tags can be used if there are many report parts in the report. Also, a report part tag can be smaller than the report tag as the report part tag needs to encode less information (e.g., an identifier of the report part).

When a report having one or more report parts is printed, corresponding report tag and report part tags are also printed. The report tag can be printed at any location on the report. In FIG. 1, the QR code 106 is printed in the bottom portion of the report 100. In one embodiment, the report part tags are placed closer to their corresponding report parts. For example, the bar code 108 is placed just below the pie chart and the color code 110 is placed just below the table 104.

The printed report 100 is a sales report. The report 100 provides a picture about sales from various countries. The first report part includes a pie chart 102 having various shaded sections to represent the amount of sales. The second report part is a table 104 showing the amount of sales for various countries. The report 100 can employ various presentation schemes, sometimes called conditional formatting, such as, color schemes, graphics, etc. For example, the sectors of the pie chart 102 can have different colors. As another example, if sales from a country are in the range of $500,000 to $999,999, then the country filed and corresponding sales amount in the table 104 can be coded with a first color. Similarly, if sales from a country are in the range of $250,000 to $499,999, then the country field and corresponding sales amount in the table 104 can be coded with a second color. It should be noted that the report 100 of FIG. 1 is an example and various other types of reports for different purposes and including different report parts and presentation schemes are possible.

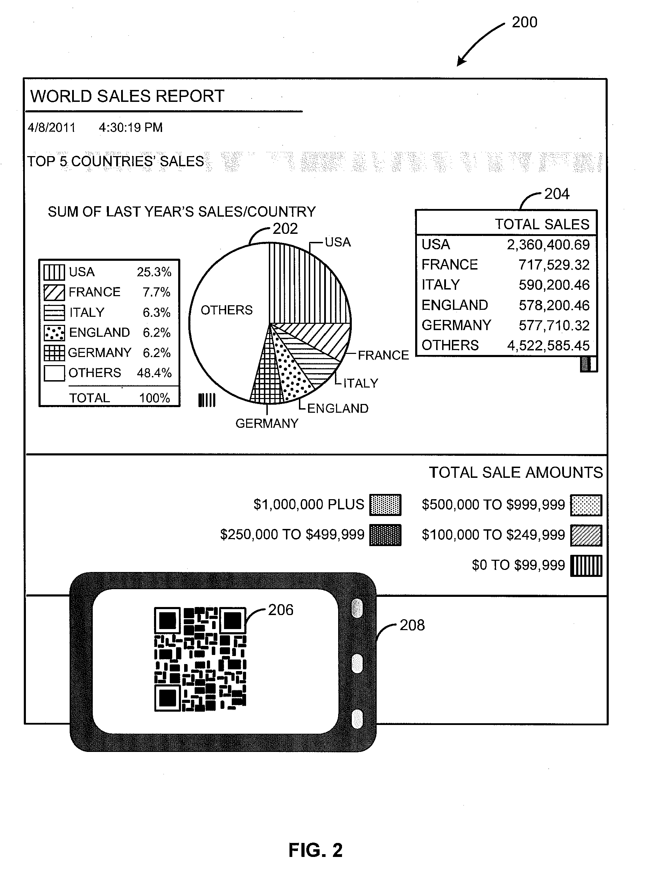

Referring to FIG. 2, a user can view the printed report 200 to understand the sales data. However, the pie chart 202 and the table 204 may represent only past sales data. The user may be interested in having an updated report part that reflects latest sales data. The user may be interested in some other update or, manipulation of the report (e.g., drill down, providing a new parameter), or some other action (e.g., localizing report). To obtain latest report part, firstly, the QR code 206 of the printed report 200 is captured using a mobile device 208. The mobile device 208 should include a camera for capturing the QR code 206 or suitable identifier. In some embodiment, the camera can be coupled to the mobile device via a wired or wireless connection. In another embodiment, the mobile device can include a tag reader such as a barcode reader. The user can focus the camera over the QR code 206 to capture the QR code 206. The mobile device 208 can be a mobile phone (e.g., a smart phone), a tablet, or any other device that has a mobile connection or wireless connectivity to a network. After the QR code 206 is captured, the QR code 206 is decoded at the mobile device 208 to obtain an identifier of the printed report 200. A request using the decoded tag, i.e. the identifier, is then made to a central repository where identifiers of the report tags and report part tags are stored. The request includes the identifier and information about the user of the mobile device. The request can be represented as follows:
getDocumentMetadata(report identifier, user info)

At the repository, based on the request received from the mobile device 208, a report or an instance of the report that corresponds to the identifier is searched. If the relevant report is found, metadata of the report is sent to the mobile device 200. Metadata includes report part tags of the report parts, an identifier of a document to which the printed report belongs, and an identifier of an instance of the document. In one embodiment, the central repository sends a "SUCCESS" message along with the metadata to the mobile device. The mobile device receives the "SUCCESS" message and then notifies the user of the successful match.

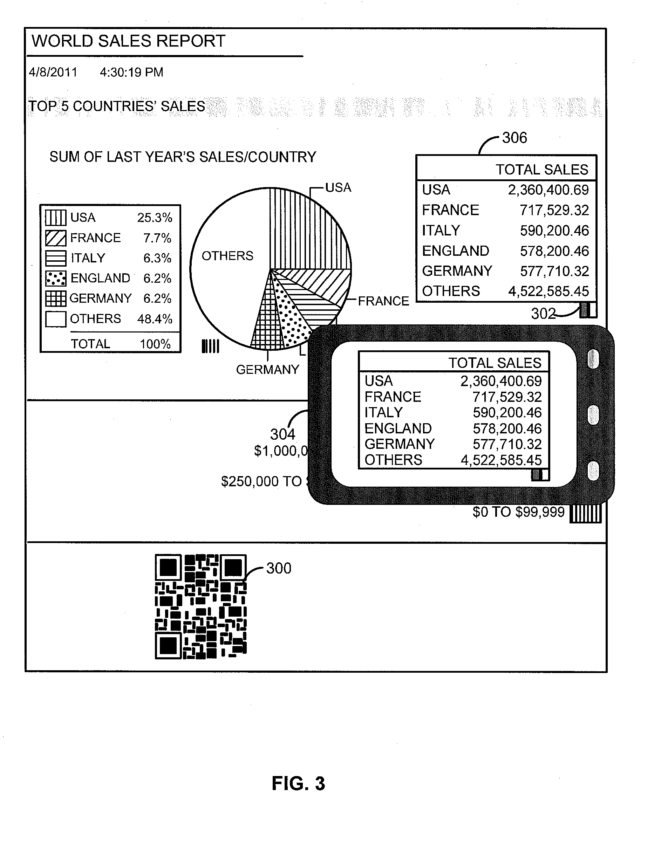

Referring to FIG. 3, after the successful match of the report tag 300, a report part tag 302 is captured by the user using the mobile device 304. To capture the report part tag 302, the user can focus the mobile device's camera over the report part 306 so that the report part tag 302 is in view of the camera. The report part tag 302 is then decoded at the mobile device 304 to obtain an identifier of the report part tag 302. A request using the decoded report tag is then made to the central repository. The request includes the identifier of the report part tag and information about the user of the mobile device. The request can be represented as follows:
getDocumentPart(report part identifier)

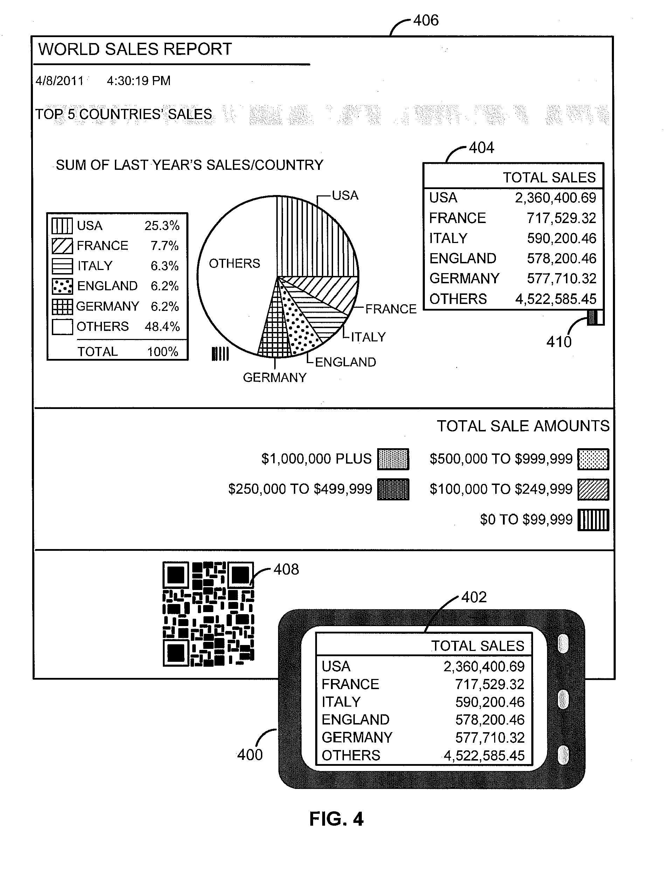

The central repository receives the decoded report part tag. The central repository now has the decoded report tag, decoded report part tag, and user information. An instance of the report is retrieved and the report part corresponding to the decoded report tag is rendered. In one embodiment, the report part is rendered by deleting or hiding other parts and areas from the instance. The rendered report part is sent to the mobile device. Referring to FIG. 4, the mobile device 400 receives the rendered report part from the repository and presents the rendered report part 402 on the screen of the mobile device 400. The rendered report part 402 that is presented on the mobile device's screen is same as the report part 404 (table) that is on the printed report 406. This indicates that there is a successful match of both the report tag 408 and the report part tag 410.

A user who intends to have an updated table needs perform an operation on the mobile device 400. A variety of user operations can be used to indicate a user's intention to have an updated report. For example, a selection of a specific key by a user can be considered as a user operation to get an updated report. Other user operations can include touch-screen related gestures such as swiping, pull-down, tapping, etc, if the mobile device has a touch-responsive screen. In response to a user operation, an update request is created at the mobile device. The update request can be represented as below:
getRefreshedDocumentPart(report part identifier, instance identifier, user info)

The update request is sent to the central repository. The central repository receives the request and searches for the instance and the report part identifier. A copy of the instance is retrieved. The instance is refreshed to update the instance with latest data. The refreshed instance includes updated report parts. The updated report part related to the report part identifier is rendered and sent to the mobile device. The updated report part is sent as an image. In some instances it is possible the updated report or report part to be the same as the printed report. That is, there is no update which may be information to the user.

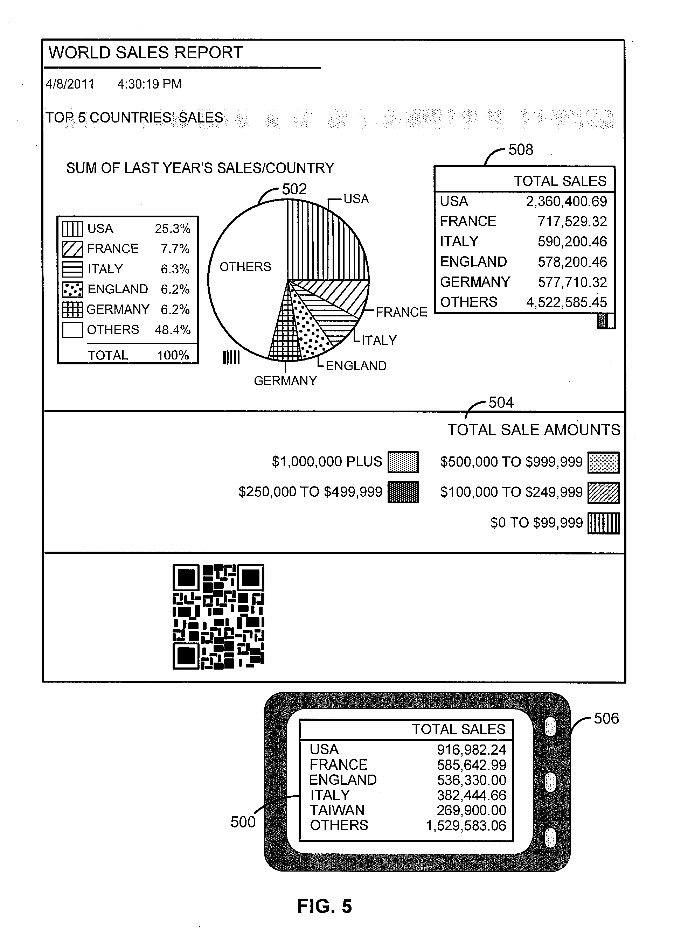

Referring to FIG. 5, in one embodiment, the updated report part (table) 500 may be rendered by hiding all other parts of the report. For example, the table 500 is rendered (at the repository) by hiding other parts such as the pie chart 502 and "Total Sale Amounts" portion 504. In another embodiment, the updated report part 500 may be rendered by deleting other parts of the report. For example, the table 500 is rendered by deleting the pie chart 502 and "Total Sale Amounts" portion 504. The mobile device 506 receives the updated report part 500 from the central repository and presents the updated report part 500 on the screen. A user can readily compare the updated report part 500 with the corresponding report part 508 that is on the printed report.

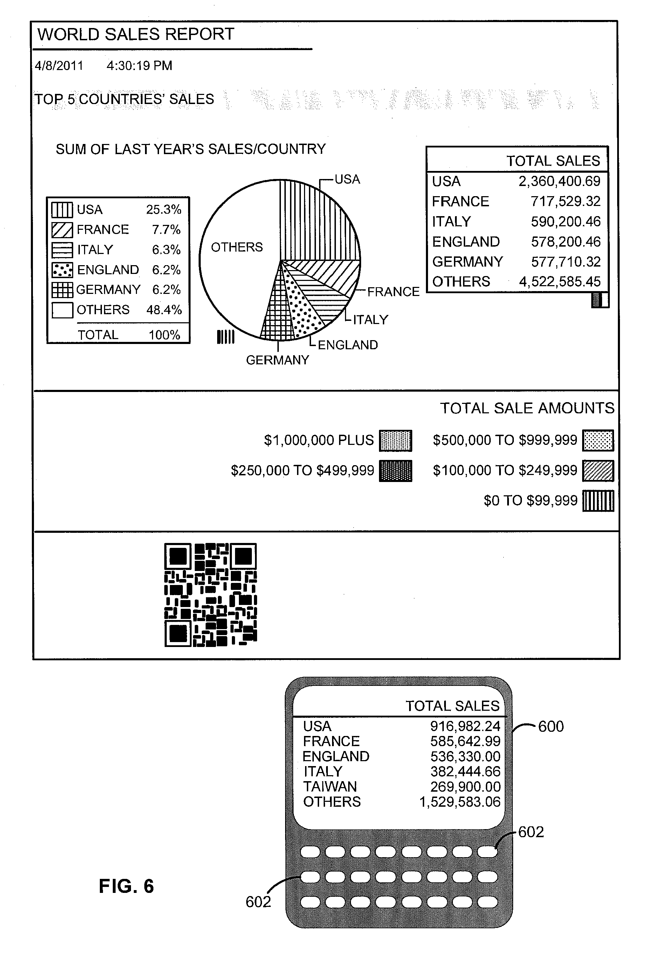

The augmented viewing of a printed report, as described above, can be possible with any kind of mobile device have an image capturing component such as a camera. User operations to update a report part can vary depending on the type of the mobile device. For touch-screen mobile devices, the user operations can include tapping, pull-down gestures or other gestures. For a mobile device 600 having keys 602 (QWERTY or other arrangement) as shown in FIG. 6, a simple key selection can trigger a user operation to request an updated report part. A user can be prompted to select one of the keys 602 to update a report part. In case of mobile devices having larger screen areas (e.g., tablets), it is possible to present more than one report part. Once the report is received, a user can perform operations such as zooming, moving on the updated report part image.

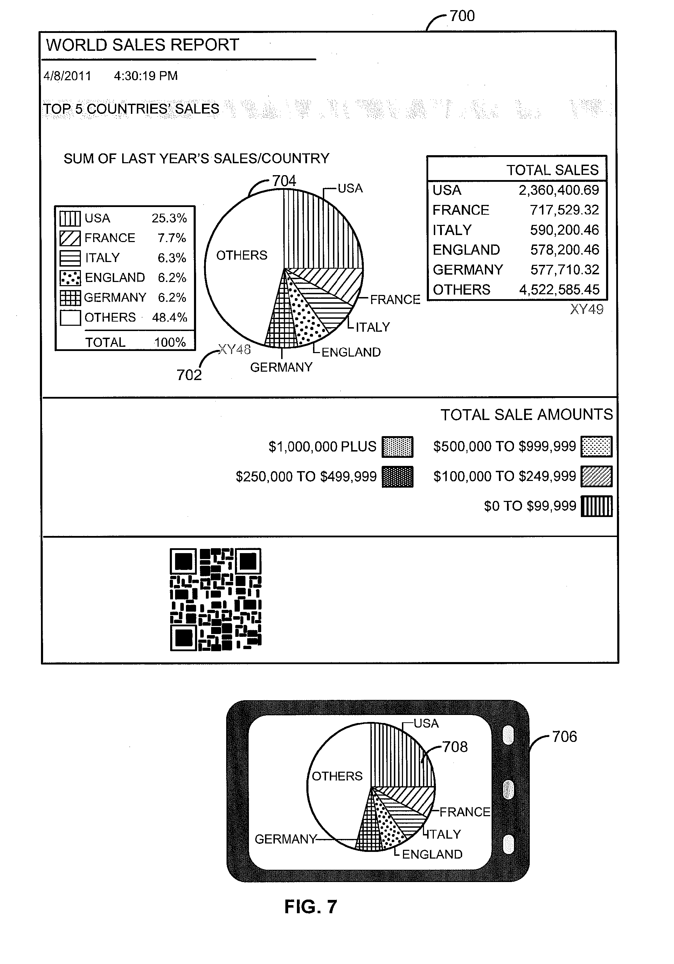

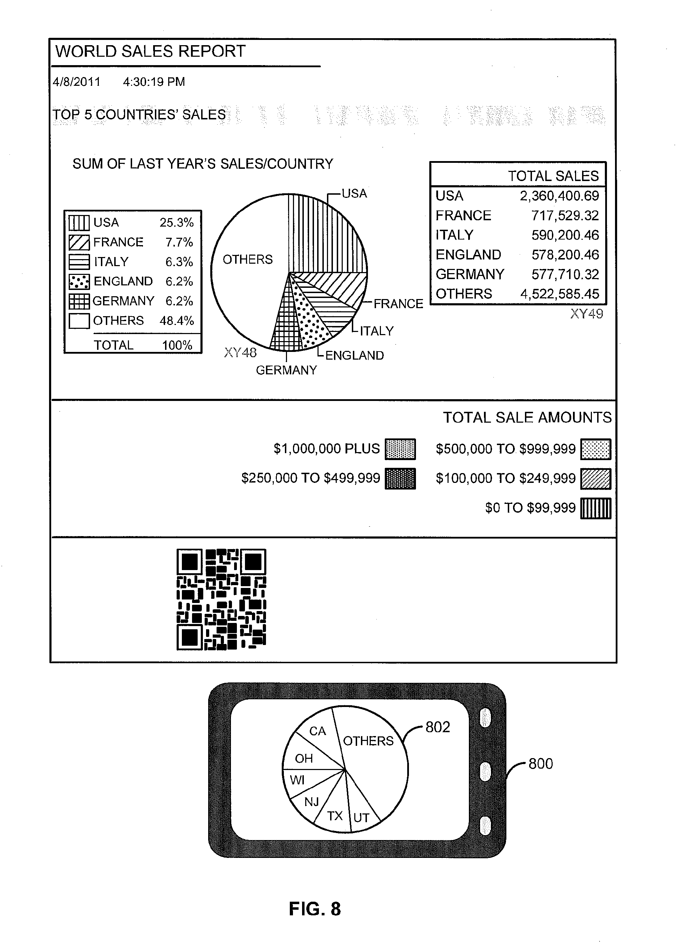

Referring an embodiment of a printed report 700 as shown in FIG. 7, the report tag includes a watermark 702 and the updated report part is a pie chart 704 that is presented on the screen of the mobile device 706. In some cases, a user may want to have more information about a specific portion of the updated report part. Therefore, in one embodiment, touch-responsive areas can be provided on the updated report part 704. Each the sector of the pie chart 704 can be a touch-responsive area 708. A user can perform touch-screen related operations such as tapping on a touch-responsive area 708 to request specify more information. For example, if a user selects or taps on the touch-responsive sector "US" 708, a central repository is requested to provide more information such as drill-down information corresponding to the sector "US." The central repository can generate a new image for the drill-down information. The new image can include a pie chart showing state-wide sales data. The new image is then sent to the mobile device 706. As shown in FIG. 8, the mobile device 800 receives the new image 802 and presents the new image 802 on the screen. Similarly, touch-responsive areas can be provided on any type of report part. For example, for a bar chart, each bar can be a touch-responsive area.

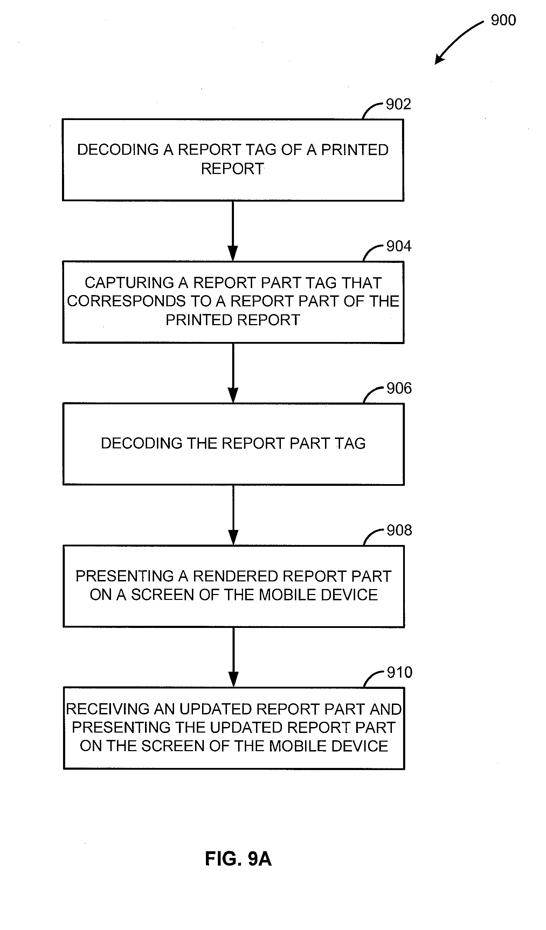

FIG. 9A illustrates an embodiment of a method for augmented viewing of a printed report. The printed report includes a report tag and one or more report parts. Each report part includes a corresponding report part tag. Initially, an image of a report tag of the printed report is captured using a mobile device. At 902, the report tag is decoded at the mobile device. The decoded report tag is sent to a central repository. The central repository searches for a document instance that corresponds to the decoded tag. If there is a matching instance in the repository, the mobile device is notified about the successful match. At 904, a report part tag of interest to a user is captured using the mobile device. At 906, the report part tag is decoded at the mobile device. The decoded report part tag is sent to the central repository. The central repository receives the decoded report part tag and generates a report part that corresponds to decoded report part tag. At 908, the rendered report part is sent to the mobile device and presented on a screen of the mobile device. If a user intends to have an updated version of the report part that is presented at 908, the user can perform an operation using the mobile device. These operations can include touch-screen gestures or key selections depending on the type of the mobile device. For example, a new parameter value is provided. A request is created at the mobile phone and sent to the central repository based on the user operation. The central repository receives this request and generates an updated report part, which is then sent to the mobile device. The updated report part is received at the mobile device and presented on the screen of the mobile device at 910. In the example, the visualizations for the new parameter are displayed. Both the mobile device and the central repository include processors that execute software instructions or code stored on a storage medium.

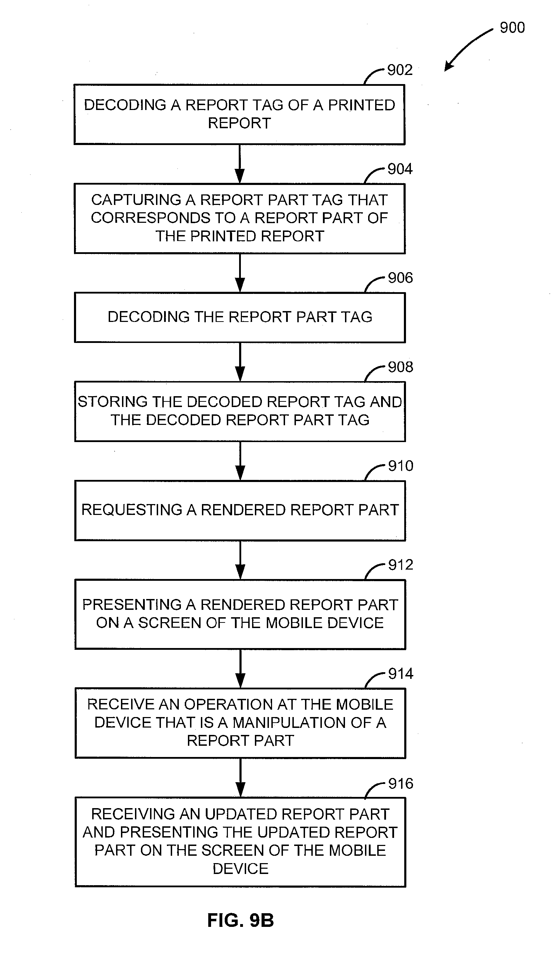

FIG. 9B illustrates another embodiment of a method for augmented viewing of a printed report. Initially, an image of a report tag of the printed report is captured using a mobile device. At 902, the report tag is decoded at the mobile device. At 904, a report part tag of interest to a user is captured using the mobile device. At 906, the report part tag is decoded at the mobile device. At 908, the decoded report tag and the decoded report part tag are stored. The stored tags can be retrieved for later use. In one embodiment, the storage is much like a bookmark in a web browser. In some embodiments, the report tag and the report part tag are stored before decoding. Storage of report tags and report part tags (before or after decoding) allows users to access the report without a copy of the printed report or a particular section of the report. At 910, a rendered report part is requested by the mobile device. The mobile device sends a stored decoded report part tag to the central repository to request a corresponding rendered report part. The central repository receives the decoded report part tag and generates a report part that corresponds to decoded report part tag. At 912, the rendered report part is sent to the mobile device and presented on a screen of the mobile device. If a user intends to have an updated version of the report part that is presented at 912, the user can perform an operation using the mobile device. At 914, the mobile device receives an operation that is a manipulation (i.e., interaction) of the report part. The interaction could include changing the way the data in the report part is aggregated. For example, changing sales report from grouping and displaying "revenue by store" to "revenue by week." A request is created at the mobile phone and sent to the central repository based on the user operation that is received at the mobile device. The central repository receives this request and generates an updated report part, which is then sent to the mobile device. The updated report part is received at the mobile device and presented on the screen of the mobile device at 916.

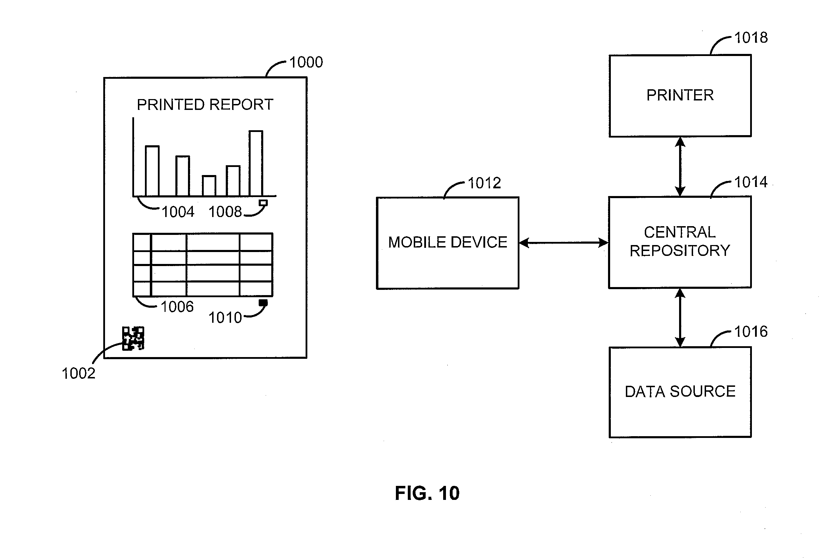

FIG. 10 illustrates elements for augmented viewing according to one embodiment. An instance of a document is printed with a report tag and one or more report part tags. The printed report 1000 includes a report tag 1002 and report parts such as, for example, a bar chart 1004 and a table 1006. Both the bar chart 1004 and the table 1006 have respective report part tags 1008 and 1010. The mobile device 1012 sends requests (e.g., request using decoded report tag and request using decoded report part tag) and receives data (e.g., metadata, rendered report part, updated report part) from the central repository 1014, as described previously. The central repository 1014 stores identifiers of various document instances and report parts. In one embodiment, the central repository 1014 can also store user, configuration, authorization, and authentication details. The central repository 1014 also interfaces with a data source 1016. There can be more than one data source 1016. The central repository 1014 also creates report tags and report part tags and stores the created tags. The stored tags are used when printing reports. When a report is printed using a printer 1018, the stored tags associated with that report are also printed.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hard-wired circuitry in place of, or in combination with machine readable software instructions.

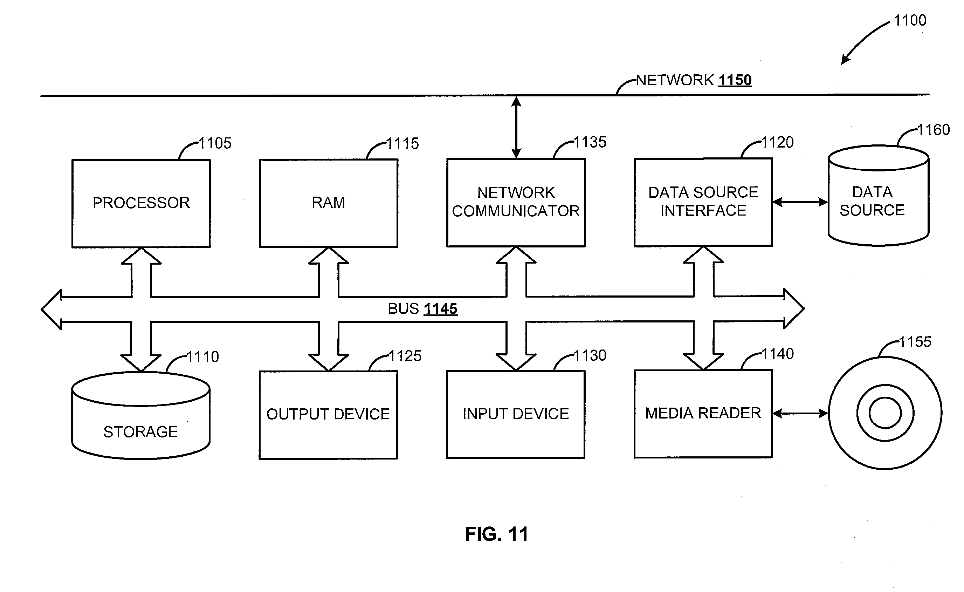

FIG. 11 is a block diagram of an exemplary computer system 1100. The computer system 1100 includes a processor 1105 that executes software instructions or code stored on a computer readable storage medium 1155 to perform the above-illustrated methods of the invention. The computer system 1100 includes a media reader 1140 to read the instructions from the computer readable storage medium 1155 and store the instructions in storage 1110 or in random access memory (RAM) 1115. The storage 1110 provides a large space for keeping static data where at least some instructions could be stored for later execution. The stored instructions may be further compiled to generate other representations of the instructions and dynamically stored in the RAM 1115. The processor 1105 reads instructions from the RAM 1115 and performs actions as instructed. According to one embodiment of the invention, the computer system 1100 further includes an output device 1125 (e.g., a display, a printer) to provide at least some of the results of the execution as output including, but not limited to, visual information to users and an input device 1130 to provide a user or another device with means for entering data and/or otherwise interact with the computer system 1100. Each of these output devices 1125 and input devices 1130 could be joined by one or more additional peripherals to further expand the capabilities of the computer system 1100. A network communicator 1135 may be provided to connect the computer system 1100 to a network 1150 and in turn to other devices connected to the network 1150 including other clients, servers, data stores, and interfaces, for instance. The modules of the computer system 1100 are interconnected via a bus 1145. Computer system 1100 includes a data source interface 1120 to access data source 1160. The data source 1160 can be accessed via one or more abstraction layers implemented in hardware or software. For example, the data source 1160 may be accessed by network 1150. In some embodiments the data source 1160 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

In the above description, numerous specific details are set forth to provide a thorough understanding of embodiments of the invention. One skilled in the relevant art will recognize, however that the invention can be practiced without one or more of the specific details or with other methods, components, techniques, etc. In other instances, well-known operations or structures are not shown or described in details to avoid obscuring aspects of the invention.

Although the processes illustrated and described herein include series of steps, it will be appreciated that the different embodiments of the present invention are not limited by the illustrated ordering of steps, as some steps may occur in different orders, some concurrently with other steps apart from that shown and described herein. In addition, not all illustrated steps may be required to implement a methodology in accordance with the present invention. Moreover, it will be appreciated that the processes may be implemented in association with the apparatus and systems illustrated and described herein as well as in association with other systems not illustrated.

The above descriptions and illustrations of embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize. These modifications can be made to the invention in light of the above detailed description. Rather, the scope of the invention is to be determined by the following claims, which are to be interpreted in accordance with established doctrines of claim construction.

## Claims

1. A computerized method for augmented report viewing using a mobile device, the method comprising:
decoding a report tag of a printed report, wherein an image of the report tag is captured using a mobile device and the printed report includes one or more report parts;
after a successful match based on the decoded report tag, capturing a report part tag that corresponds to a report part of the printed report;
decoding the report part tag;
based on the decoded report part tag, presenting a rendered report part on a screen of the mobile device; and
in response to a user operation on the mobile device after the rendered report part is presented on the screen, receiving an updated report part and presenting the updated report part on the screen of the mobile device.

2. The method of claim 1, further comprising:
providing at least one touch-responsive area on the updated report part; and
in response to the user operations on the at least one touch-responsive area, receiving a new image that corresponds to the at least one touch-responsive area and presenting the new image on the screen.

3. The method of claim 1 or 2, wherein the report tag comprises at least one of a barcode, a color code, a quick response code, a watermark, and a printed identifier.

4. The method of any of the preceding claims, wherein the report part tag comprises at least one of a barcode, a color code, a printed identifier, a quick response code, and a watermark.

5. The method of any of the preceding claims, wherein the user operations comprise gestures on the screen or key selections.

6. The method of any of the preceding claims, wherein the report part comprises a chart or a table that provides an analysis of data in a data source.

7. The method of any of the preceding claims, further comprising:
receiving metadata of the printed report after a successful match based on the decoded tag, preferably wherein the metadata includes report part tags of the one or more report parts and an identifier of an instance of the printed report.

8. The method of any of the preceding claims, wherein the decoded report tag comprises an identifier that corresponds to an instance of the printed report and the decoded report part tag comprises an identifier that corresponds to the report part.

9. The method of any of the preceding claims, further comprising:
receiving the rendered report part from a central repository for presenting the rendered report part on the screen.

10. The method of any of the preceding claims, further comprising:
storing at least one of the decoded report tag and the decoded report part tag;
requesting the rendered report part; and
receiving the user operation at the mobile device that is a manipulation of the report part.

11. A computer system for augmented report viewing, comprising:
a computer memory to store program code; and
a first processor to execute the program code to:
decode a report tag of a printed report, wherein an image of the report tag is captured using a mobile device and the printed report includes one or more report parts;
after a successful match based on the decoded report tag, capture a report part tag that corresponds to a report part of the printed report;
decode the report part tag;
based on the decoded report part tag, present a rendered report part on a screen of the mobile device; and
in response to a user operation on the mobile device after the rendered report part is presented on the screen, receive an updated report part and presenting the updated report part on the screen of the mobile device.

12. The system of claim 11, further comprises a repository and a second processor to execute the program code to:
receive the decoded report tag at the repository;
send the metadata of the printed report to the mobile device;
receive the decoded report part tag at the repository;
based on the decoded report part tag, render a corresponding report part from the repository; and
send the rendered report part to the mobile device.

13. The system of claim 12, wherein the second processor further executes the program code to:
create the report tag and the report part tag; and
store the report tag and the report part tag in the repository.

14. The system of any of claims 11 to 13, wherein the first processor further executes the program code to perform a method as claimed in any of claims 1 to 10.

15. A computer program or computer program product comprising software code adapted, when executed on a processing device, to perform a method as claimed in any of claims 1 to 10.
